Europäisches Patentamt

European Patent Office

Office européen des brevets

(19)

(11) **EP 1 625 934 A1**

(12) **EUROPEAN PATENT APPLICATION**
published in accordance with Art. 158(3) EPC

(43) Date of publication:
**15.02.2006 Bulletin 2006/07**

(51) Int Cl.:
**B32B 15/08** (1968.09)

(21) Application number: **04734401.5**

(22) Date of filing: **21.05.2004**

(86) International application number:
**PCT/JP2004/007306**

(87) International publication number:
**WO 2004/103697 (02.12.2004 Gazette 2004/49)**

(84) Designated Contracting States:
**DE NL**

(30) Priority: **22.05.2003 JP 2003144988**

(71) Applicant: **JFE Steel Corporation**
**Tokyo, 100-0011 (JP)**

(72) Inventors:
• **SUZUKI, Takeshi**
**c/o Intellectual Property Dept.,**
**Chiyoda-ku,**
**Tokyo 1000011 (JP)**
• **IWASA, Hiroki**
**c/o Intellectual Property Dept.,**
**Chiyoda-ku,**
**Tokyo 1000011 (JP)**

• **NISHIHARA, Hideki**
**c/o Intellectual Property Dept.**
**Chiyoda-ku,**
**Tokyo 1000011 (JP)**
• **CHINO, Atsushi**
**c/o Intellectual Property Dept.,**
**Chiyoda-ku,**
**Tokyo 1000011 (JP)**

(74) Representative: **Grünecker, Kinkeldey,**
**Stockmair & Schwanhäusser**
**Anwaltssozietät**
**Maximilianstrasse 58**
**80538 München (DE)**

(54) **LAMINATED METAL SHEET FOR CAN**

(57)    The laminated metallic sheet for can is composed of a polyester resin film containing about 50% by mole or more of polyethylene terephthalate on at least one side of a metallic sheet, and shows about 22 to about 25 cm$^{-1}$ of half value width of shift peak caused by the C=O stretching vibration at $1730\pm20$ cm$^{-1}$ in the Raman spectra, using a linear polarization laser light, on the film of the laminated metallic sheet for can after heat treatment. The metallic sheet does not generate cracks in the film on the metallic sheet and has excellent workability after heat treatment even to the working after heat treatment such as baking finish and baking print.

*FIG. 1*

EP 1 625 934 A1

**Description**

**TECHNICAL FIELD**

The present invention relates to a laminated metallic sheet for can, used for metallic can and can lid by working thereof after heat treatment such as baking finish and baking print.

**BACKGROUND ART**

In recent years, the can manufacturing industry studies the application of laminated metallic sheet fabricated by laminating a thermoplastic resin film on a metallic sheet. Particularly from the points of corrosion resistance, safety, and heat resistance, there have been given the proposals relating to the laminated metallic sheet for can using polyester resin as the laminate because the polyester resin represented by polyethylene terephthalate has well-balanced characteristics.

The term "laminate" designates, in a wide sense, making plywood, or plating resin films, aluminum foils, papers, and the like together. The term referred to herein designates coating at least one side of metallic sheet by a resin film.

For example, JP-B-60-47103, (the term "JP-B" referred to herein signifies the "Examined Japanese Patent Publication"), provides a laminating method for polyester film, where a polyester resin is fused onto a metallic sheet at or above the melting point of the resin. The patent publication discloses a technology to form an amorphous polyester layer in the vicinity of interface with the metallic sheet, which amorphous layer then improves the adhesion between the metallic sheet and the film.

JP-A-10-138389 and JP-A-10-138390, (the term "JP-A" referred to herein signifies the "Unexamined Japanese Patent Publication"), disclose a technology to improve the adhesion between a metallic sheet and a film after working, by adjusting the amorphous polyester layer in the vicinity of interface with the metallic sheet to a low orientation state giving 0.010 or smaller double refraction index, and specifying the percentage of the thickness of the amorphous layer to the total thickness of the film to a range from 40 to 90%.

The laminated metallic sheets described in above three patent publications show excellent workability when as-laminated metallic sheet is formed to can body and can lid, (hereinafter also referred to as the "can manufacturing work"). If, however, the can manufacturing work is given after painting or printing on the laminated metallic sheet in order to give decorative appearance, indication of contents, indication of cautions, and the like, cracks are generated in the film during the can manufacturing work stage because the film on the metallic sheet is deteriorated by the heat of baking step for the paint and print.

Considering the above problems, the present invention has an object to provide a laminated metallic sheet for can, which laminated metallic sheet has excellent workability giving no crack in the resin film on the metallic sheet even when the can manufacturing work is applied after heat treatment such as baking finish and baking print.

**DISCLOSURE OF THE INVENTION**

The present invention provides a laminated metallic sheet for can, which laminated metallic sheet has a polyester resin film containing about 50% by mole or more of polyethylene terephthalate on at least one side of a metallic sheet, and shows about 22 to about 25 cm$^{-1}$ of half value width of shift peak caused by the C=O stretching vibration at $1730\pm20$ cm$^{-1}$ in the Raman spectra, using a linear polarization laser light, on the film of the laminated metallic sheet for can after heat treatment. The heat treatment for the laminated metallic sheet for can is preferably at least one treatment selected from the group consisting of baking finish and baking print.

For the laminated metallic sheets for can, the polyester resin is preferably a copolyester containing about 50% by mole or more of ethylene terephthalate component. The copolyester is more preferably a copolyester obtained from terephthalic acid, isophthalic acid, and ethylene glycol.

Furthermore, the present invention provides a laminated metallic sheet for can having excellent post-heat-treatment workability, which laminated metallic sheet has a polyester-based resin containing polyethylene terephthalate as the main component, being laminated on a metallic sheet, and showing 22 to 25 cm$^{-1}$ of half value width of Raman shift peak caused by the C=O stretching vibration in the vicinity of $1730\pm20$ cm$^{-1}$ in the Laser Raman spectrometry using a linear polarization laser light on the film surface layer of the laminated metallic sheet for can after heat treatment.

**BRIEF DESCRIPTION OF THE DRAWINGS**

Figure 1 shows the relation between the shift position of the C=O stretching vibration and the spectral intensity in Raman spectra of various kinds of polyethylene terephthalates having different densities with each other.

Figure 2 shows the relation between the density of polyethylene terephthalate and its half value width of the peak of C=O stretching vibration in Raman spectra.

Figure 3 shows the observed values in relation to the Raman spectral observation point on a resin layer cross section and the half value width of the peak of C=O stretching vibration for laminated metallic sheets generated cracks in the film after heat treatment.

Figure 4 shows the observed values in relation to the Raman spectral observation point on a resin layer cross section and the half value.width of the peak of C=O stretching vibration for laminated metallic sheets which did not generate cracks in the film after heat treatment.

Figure 5 shows an example of the laminating facility of thermofusion type.

Figure 6 shows the relation between the half value width of the peak of C=O stretching vibration in Raman spectra and the leak current on the surface layer of film.

**BEST MODE FOR CARRYING OUT THE INVENTION**

The present invention is described in detail in the following.

The inventors of the present invention conducted detail studies on the film for laminating metallic sheet, which film does not generate cracks during the can manufacturing work stage and can lid working stage even after the heat treatment such as baking finish and baking paint, and have found that, for a metallic sheet laminated with a polyester film containing polyethylene terephthalate, (hereinafter referred to also as PET) , as the main component, precise control of the degree of crystallinity of amorphous crystals (spherulite) formed in the film layer after the heat treatment is effective.

The term "heat treatment" referred to herein designates the heating of a work to, normally, temperatures approximately ranging from 150°C to 220°C for several minutes to several tens of minutes before can manufacturing and can lid working. That kind of heat treatment includes baking finish and baking print. The term "amorphous crystals" referred to herein designates polymer crystals which are not oriented to a specific direction, and is generally called the "spherulite". For differentiating from the oriented crystals having planar orientation obtained by biaxial stretching, the term "amorphous crystals" is given herein.

Thus, the inventors of the present invention found that a laminated steel sheet having excellent post-heat-treatment workability is manufactured by the use of the half value width of shift peak obtained by Laser Raman spectrometry with the index of degree of crystallinity of amorphous crystals (spherulite), and by the control of the half value width into a specific range.

There is a generally known relation between the volume fraction degree of crystallinity indicating the degree of formed crystalline polyester, (hereinafter referred to as the "degree of crystallinity"), and the density of resin laminating the metallic sheet, as given in eq.(1), ("Polymer solid structure, II" Kyoritsu Publication Co., Ltd. p305, (1974)).

$$\text{Volume fraction degree of crystallinity (\%)} = [(\rho - \rho a)/(\rho c - \rho a)] \times 100 \qquad (1)$$

where, p is the observed value of density, and $\rho c$ and $\rho a$ are the density of perfect crystal and perfect amorphous crystal, respectively.

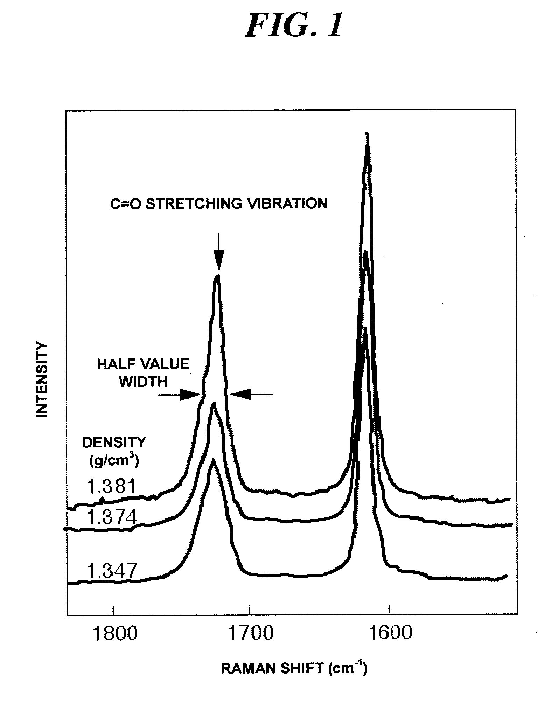

Further study was given based on the above findings and the relation between the density and the degree of crystallinity of resin. The obtained result is shown in Fig. 1. Figure 1 gives the observed result of Raman spectra on PETs having different densities from each other, using a linear polarization light Ar[+] laser (514.5 nm of wavelength) as the laser light source. Since the half value width depends on, to some degree, the wave number resolution of the applied spectrometer, the wave number resolution of the spectrometer was set to 10.4 cm[-1] to assure the accuracy. As seen in Fig. 1, varied density of PET resin significantly varies the half value width of shift peak, (hereinafter referred to also as the "peak") , caused by the C=O stretch vibration in the vicinity of 1730 cm[-1] in the Raman spectra.

The shift peak caused by the C=O stretching vibration appears at 1730±20 cm[-1], or in a range from 1710 to 1750 cm[-1], and is easily determined by one skilled in the art. Although the shift peak of PET caused by the C=O stretching vibration appears at 1730 cm[-1], it is observed in a range of 1730±10.4 cm[-1] because the wave number resolution is 10.4 cm[-1]. Generally the center of gravity of shift peak appears in the vicinity of 1730 cm[-1].

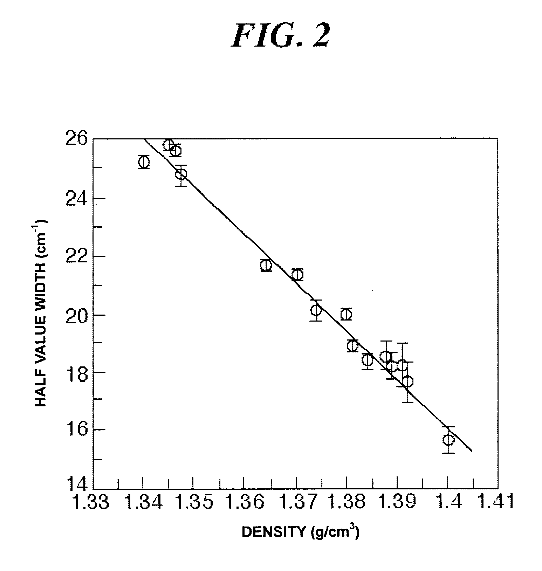

To this point, Raman spectra were observed on PETs of known densities to determine the relation between the density and the value width of shift peak. The result is given in Fig. 2. The figure shows that the density and the half value width of peak have a linear correlation.

The above result provides a correlation between the half value width of peak and the degree of crystallinity of resin laminating the steel sheet. Consequently, when a calibration curve for the half value width obtained from PET resins of known densities is prepared, the working curve can be used as an index of degree of crystallinity of amorphous crystal. In this manner, if the formation of amorphous crystals in the film by heat treatment is controlled so as the half value width of the peak to enter an appropriate range, there is appeared a possibility to prevent the deterioration of workability for film after heat treatment.

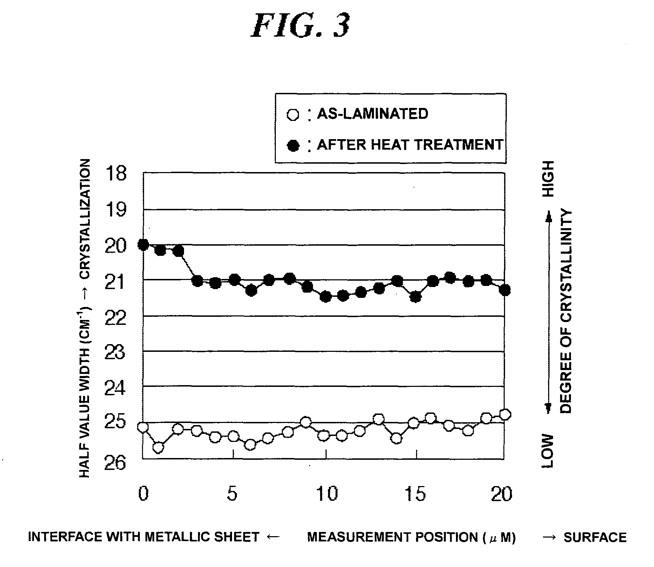

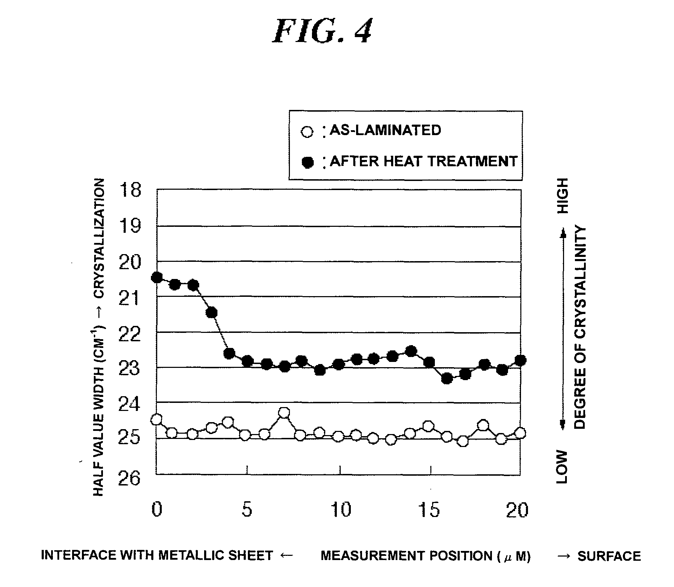

Then, the relation between the crack generation and the half value width used as the index of degree of crystallinity of amorphous crystal, (or the degree of crystallinity) , was studied. There were prepared a laminated metallic sheet on which cracks appeared by DuPont impact working after the heat treatment at 180°C for 15 minutes, and a laminated metallic sheet which did not generate cracks by DuPont impact working after the heat treatment at 180°C for 15 minutes. Additionally, a metallic sheet as-laminated state without subjecting to heat treatment was also prepared. Each of the metallic sheets was polished on a cross section. Laser light was radiated normal to the cross section of the resin layer, and the resulting Raman scattered lights were observed. A linear polarization light Ar$^+$ laser (514.5 nm of wavelength) was used as the laser light, and the incidence condition was that the polarization direction was inparallel to the thickness direction of the film cross section. The laser light was converged to about 1 $\mu$m on the surface of sample using a lens (x100 magnification). In the present invention, the observation was given under a condition that the polarization direction of the linear polarization light becomes parallel to the thickness direction of the film cross section because the condition is most suitable for the evaluation of amorphous crystals which have poor orientation. When the polarization direction is set to normal to the thickness direction of the film cross section, ( i.e. parallel to the film surface), the degree of crystallinity of crystals having plane orientation by the stretch during film-forming stage can be evaluated. On the other hand, when the polarization direction is set to parallel to the thickness direction of the film cross section, the degree of crystallinity of amorphous crystals can be evaluated. While moving the incidence position at 1 $\mu$m pitch in the thickness direction on the resin layer cross section, the Raman spectra were sequentially observed. From thus obtained data, the half value width of shift peak caused by the C=O stretching vibration in the vicinity of 1730 m$^{-1}$ was determined, and the values were plotted along the resin thickness from the interface between the metallic sheet and the resin to the resin surface, which plots are shown in Fig. 3 and Fig. 4. Figure 3 shows the observed values for the laminated metallic sheets which generated cracks in the film. Figure 4 shows the observed values for the laminated metallic sheets which did not generate cracks in the film.

Figures 3 and 4 show that the half value width of as-laminated metallic sheets without subjected to heat treatment gave almost constant values in the vicinity of 25 cm$^{-1}$ in the thickness direction. However, the half value width in the vicinity of surface of resin after heat treatment, (calculated as the average value among three observed values from the surface to 3 $\mu$m in depth at an interval of 1 $\mu$m), gave 21.2 cm$^{-1}$ in Fig. 3, and 22.9 cm$^{-1}$ in Fig. 4. These show that the laminated metallic sheet which generated cracks gave high degree of crystallinity of amorphous crystals on the surface of resin after heat treatment, while the laminatedmetallic sheet which did not generate cracks gave low degree of crystallinity of amorphous crystals on the surface of resin after heat treatment.

Consequently, the increase in the degree of crystallinity of amorphous crystals resulting from the heat treatment becomes a cause of crack generation during the working stage after the heat treatment. In addition, it was found that the degree of crystallinity of amorphous crystals after the heat treatment depends on the half value width on the surface of film.

Next, the heat treatment condition was varied to investigate the relation between the half value width of peak caused by the C=O stretching vibration on the film surface observed under the same condition as above, (calculated as an average of three points counted from surface) , and the crack generation in the film caused by the DuPont impact working. The result revealed that, if only the half value width of the film surface layer after the heat treatment is 22 cm$^{-1}$ or larger, crack generation is suppressed, while the half width of the film surface layer after the heat treatment is smaller than 22 cm$^{-1}$, cracks are generated. That is, independent of heat treatment conditions such as temperature condition and heat treatment time, if the half value width of the film surface layer after the heat treatment is 22 cm$^{-1}$ or larger, a laminated metallic sheet for can having excellent workability after the heat treatment is obtained.

In the present invention, the upper limit of half value width of peak is specified to 25 cm$^{-1}$ or smaller, since the half value width of PET resins in a perfect amorphous state is about 25 cm$^{-1}$, the half value width of 25 cm$^{-1}$ is accepted as a state substantially free from crystals. Therefore, the range of half value width of peak on the film surface is specified to a range from the state that no amorphous crystal having 25 cm$^{-1}$ of half value width exists to the state of a degree of crystallinity of amorphous crystals specified by 22 cm$^{-1}$ of half value width.

As the polyester resin containing about 50% by mole or more of PET according to the present invention, resins containing polyethylene terephthalate as the main component can be widely used. Examples of those resins are polyethylene terephthalate (homopolymer), poly(ethylene terephthalate-co-isophthalate) varying the concentration of isophthalic acid, and copolymers of terephthalic acid and/or isophthalic acid with a diol such as propylene glycol, 1,4-butanediol, 1,6-hexanediol, neopentyl glycol, and cyclohexane dimethanol. These resins may be used separately or mixing them together. A single layer may be applicable, and multilayered resin composed of two layers or more of different ingredients may also be applicable. Even when copolymer resin, mixed resin and/or multilayered resin is used, the percentage of PET is about 50% by mole or more. According to the present invention, preferable percentage of PET is in a range from about 80 to 100% by mole, and more preferably from about 85 to about 90% by mole.

Applicable metallic sheet in the present invention includes various types of surface-treated steel sheets and light metal sheets of aluminum, copper, and their alloy. Applicable surface-treated steel sheet includes cold-rolled steel sheet which is treated by annealing and then by secondary cold-rolling, followed by one or more of surface treatment such as zinc-base plating, tin plating, nickel plating, chromium plating, tin and chromium two layer plating, electrolytic chromic acid treatment, chromic acid treatment, and phosphoric acid treatment. Widely applicable light metal sheet includes pure aluminum sheet, aluminum alloy sheet, and copper alloy sheet.

According to the present invention, the polyester resin may laminate at least one side of the metallic sheet. Current industrial applications often laminate on both sides of the metallic sheet. Although the thickness (total thickness) of the polyester resin for laminating is not specifically limited, it is preferably in a range from 5 to 50 $\mu$m. If the total thickness is 5 $\mu$m or larger, the workability of lamination improves, and sufficient working corrosion resistance is attained. If the total thickness is not larger than 50 $\mu$m, economical advantage is attained even compared with epoxy-base paints which are widely used in the can manufacturing field.

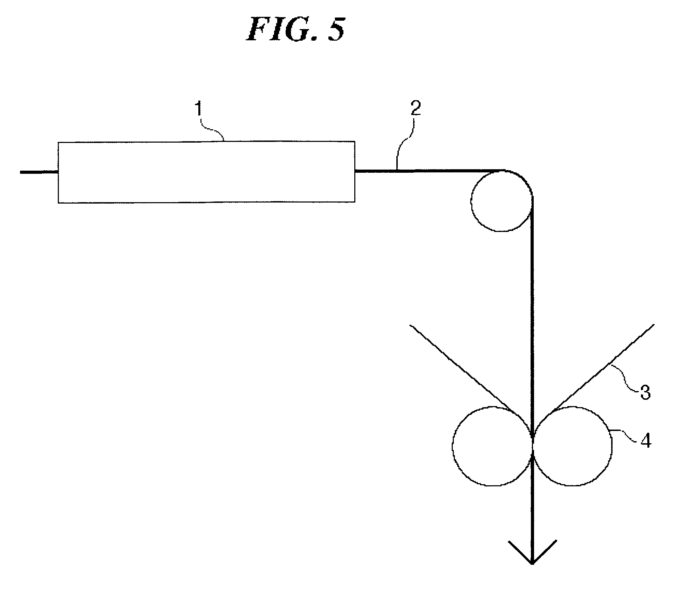

For improving beautiful appearance, coloring agent such as pigment and dye may be added to the resin film. For providing slidability, inorganic lubricating agent, antistatic agent, and the like may be added to the resin film. The method for thermocompression bonding coating of resin film on the surface of metallic sheet is not specifically limited. Generally a thermofusion type laminating unit shown in Fig. 5 is applied. The metal strip 2 heated in the heater 1 is clamped between a pair of lamination rolls 4. By applying a specified lamination roll pressing force to the strip 2, the resin film 3 continuously laminates on one side or both sides of the metal strip 2. In this case, it is applicable to form an adhesive layer between the film and the metallic sheet, thereby conducting lamination via the adhesive.

After the thermocompression bonding of resin film, quenching is preferably applied. Quenching prevents the formation of amorphous crystals in the film, which is advantageous in workability. To prevent the formation of amorphous crystals in the lamination stage, it is preferable to bring the film to a glass transition point or lower temperature thereof within 5 seconds.

## Examples

Examples of the present invention are described in the following along with Comparative Examples. To various types of metallic sheets shown in Table 1, various types of polyester resins shown in Table 1 were laminated using the lamination unit shown in Fig. 5, and adjusting the lamination conditions (heating temperature of metal strip, lamination control temperature, cooling condition after thermocompression bonding of polyester resin film, and the like). Then, heat treatment was applied to the laminated metallic sheets under the condition given in Table 1 to prepare the respective samples.

Each of the samples after heat treatment was buffed on a cross section. Laser Raman spectrometry using a linear polarization laser light was applied to determine the Raman spectra of the resin layer under a condition that the polarization direction is vertical to the film plane, thus investigated the half value width of peak caused by the C=O stretching vibration in the vicinity of 1730 cm$^{-1}$ of Raman shift.

The observation of Raman spectra was done by a commercially available NRS-2000 Laser Raman spectrometer (JASCO International Co., Ltd.) The conditions of observation are described below.

The incident light was Ar$^{+}$ laser (514.5 nm of wavelength) , and the laser light was converged to about 1 $\mu$m on the sample surface using a lens (x100 magnification). The laser light intensity was 2 mW on the sample surface. The slits were adjusted to 200 $\mu$m for the slit 1, and to 400 $\mu$m for the slit 3 and the slit 5. The wave number resolution was set to 10.4 cm$^{-1}$. The observation time was 5 seconds x 2 per one observation point, with the aperture of 200 $\mu$m. The observation was given at 1 $\mu$m pitch in the thickness direction, and the average value of three points counted from the film surface was calculated, which average value was adopted as the half value width of the film surface layer. Since the laser light emitted from the laser oscillator is a linear polarization light having high purity, the observation did not apply polarizer.

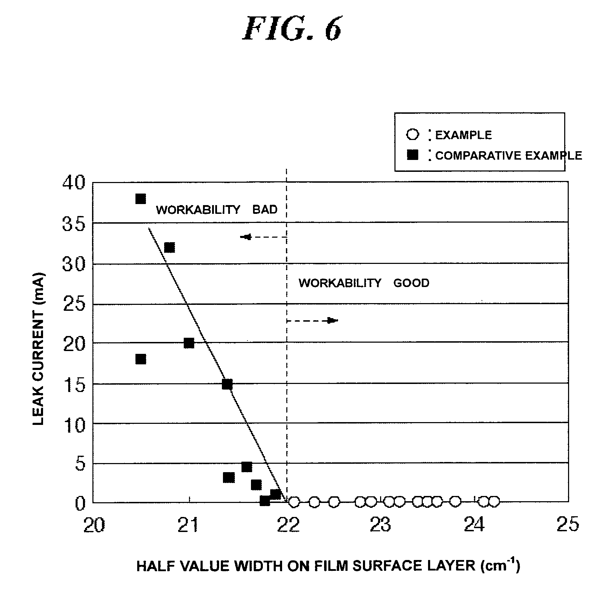

The evaluation of workability after heat treatment was given as follows. The material was cut to 100 m x 100 m in size. The cut sample was placed in a hot air circulation furnace which was controlled to a specified temperature in advance. After a predetermined period, the sample was taken out from the furnace. Detail set temperature and treatment time in the furnace for Examples and Comparative Examples are shown in Table 1. After the heat treatment, the sample was subjected to DuPont impact test (1/4 inch of punch tip diameter, 1.0 kg of weight, and 300 mm of weight drop height) by facing the target laminate surface down. Only the resulted convex portion was immersed in a 0.5% saline solution, while applying 6.2 V to the electrode and the laminated metallic sheet in the saline solution, thus reading the leak current after 10 seconds. The sample giving less than 0.1 mA of leak current was judged to good one. The result is given in Table 1 and Fig. 6.

## Table 1

| | Film | | Metallic sheet | | Heating temp. of metallic sheet (°C) | Lamination roll temp. (°C) | Time until cooling (sec) | Heat treatment condition | Half value width of film surface layer after heat treatment (cm⁻¹) | Leak current from worked portion (mA) |
|---|---|---|---|---|---|---|---|---|---|---|
| | Material*1 | Thickness (µm) | Material | Thickness (µm) | | | | | | |
| Example 1 | A | 20 | TFS*2 | 0.3 | 220 | 80 | 0.7 | 180°C x 5 min | 23.6 | less than 0.01 |
| Example 2 | A | 20 | TFS*2 | 0.3 | 220 | 80 | 0.7 | 180°C x 15 min | 23.2 | less than 0.01 |
| Example 3 | A | 20 | TFS*2 | 0.3 | 220 | 80 | 0.7 | 180°C x 30 min | 22.9 | less than 0.01 |
| Example 4 | A | 20 | TFS*2 | 0.3 | 210 | 80 | 0.7 | 180°C x 15 min | 24.2 | less than 0.01 |
| Example 5 | A | 20 | TFS*2 | 0.3 | 215 | 80 | 0.7 | 180°C x 15 min | 23.8 | less than 0.01 |
| Example 6 | A | 20 | TFS*2 | 0.3 | 222 | 80 | 0.7 | 180°C x 15 min | 22.8 | 0.03 |
| Example 7 | A | 20 | TFS*2 | 0.3 | 223 | 80 | 0.7 | 180°C x 15 min | 22.1 | 0.08 |
| Example 8 | A | 20 | TFS*2 | 0.3 | 220 | 80 | 0.7 | 150°C x 15 min | 23.5 | less than 0.01 |
| Example 9 | A | 20 | TFS*2 | 0.3 | 220 | 80 | 0.7 | 220°C x 15 min | 22.9 | 0.02 |
| Example 10 | A | 20 | TFS*2 | 0.3 | 215 | 80 | 0.7 | 130°C x after 15 min 180°C x 15 min | 23.4 | 0.03 |
| Example 11 | A | 12 | TFS*2 | 0.2 | 223 | 110 | 1.2 | 180°C x 15 min | 22.9 | 0.06 |
| Example 12 | A | 50 | TFS*2 | 0.2 | 223 | 110 | 1.2 | 180°C x 15 min | 24.1 | less than 0.01 |
| Example 13 | A | 5 | TFS*2 | 0.15 | 210 | 110 | 1.2 | 180°C x 15 min | 23.5 | 0.05 |
| Example 14 | A | 20 | Thin plating tin plate | 0.3 | 220 | 80 | 0.7 | 180°C x 15 min | 23.2 | less than 0.01 |
| Example 15 | A | 20 | Aluminum alloy | 0.3 | 220 | 80 | 0.7 | 180°C x 15 min | 23.4 | less than 0.01 |
| Example 16 | B | 20 | TFS | 0.3 | 220 | 80 | 3.6 | 180°C x 15 min | 23.1 | less than 0.01 |
| Example 17 | C | 20 | TFS | 0.25 | 250 | 100 | 0.7 | 130°C x 15 min | 22.5 | 0.02 |
| Example 18 | C | 20 | TFS | 0.25 | 245 | 100 | 0.7 | 130°C x 15 min | 23.2 | 0.01 |
| Example 19 | C | 20 | TFS | 0.25 | 252 | 100 | 0.7 | 130°C x 15 min | 22.3 | 0.03 |
| Comparative example 1 | A | 20 | TFS | 0.3 | 225 | 80 | 0.7 | 180°C x 2 min | 21.6 | 4.6 |
| Comparative example 2 | A | 20 | TFS | 0.3 | 225 | 80 | 0.7 | 180°C x 5 min | 21.4 | 15 |
| Comparative example 3 | A | 20 | TFS | 0.3 | 225 | 80 | 0.7 | 180°C x 10 min | 21.0 | 20 |
| Comparative example 4 | A | 20 | TFS | 0.3 | 225 | 80 | 0.7 | 180°C x 15 min | 20.8 | 32 |
| Comparative example 5 | A | 20 | TFS | 0.3 | 225 | 80 | 0.7 | 180°C x 30 min | 20.5 | 38 |
| Comparative example 6 | A | 20 | TFS | 0.3 | 222 | 80 | 0.7 | 180°C x 30 min | 21.8 | 0.2 |
| Comparative example 7 | C | 20 | TFS | 0.25 | 255 | 100 | 0.7 | 130°C x 15 min | 21.7 | 2.2 |
| Comparative example 8 | C | 20 | TFS | 0.25 | 260 | 100 | 0.7 | 130°C x 15 min | 20.5 | 18 |
| Comparative example 9 | C | 20 | TFS | 0.25 | 252 | 100 | 0.7 | 180°C x 5 min | 21.9 | 0.9 |
| Comparative example 10 | C | 20 | TFS | 0.25 | 252 | 100 | 0.7 | 130°C x after 15 min 180°C x 15 min | 21.4 | 3.2 |

*1 Film A: isophthalic acid copolymerized PET (12% by mole of isophthalic acid copolymerization percentage)    *2 TFS: tin-free steel
Film B: isophthalic acid copolymerized PET (8% by mole of isophthalic acid copolymerization percentage)
Film C: homo-PET

Table 1 and Fig. 6 show that the behavior of leak current at worked portion significantly varies at the half value width of 22 cm⁻¹ on the film surface. Smaller than 22 cm⁻¹ of half value width on the film surface, corresponding to Comparative Examples, suddenly increased the leak current at the worked portion, and deteriorated the workability. Inversely, at or larger than 22 cm⁻¹ of half value width on the film surface, corresponding to Examples of the present invention, gave small leak current, and showed good workability.

**INDUSTRIAL APPLICABILITY**

Therefore, according to the present invention, a laminated metallic sheet for can having excellent workability after heat treatment is obtained. Since a metallic sheet laminated by a polyester-based resin containing polyethylene terephthalate as the main component, according to the present invention, has excellent workability after heat treatment, the metallic sheet is suitable for the material of metallic can and can lid which are formed by working after the heat treatment such as baking finish and baking print.

**Claims**

1. A laminated metallic sheet for can, comprising a polyester resin film containing about 50% by mole or more of polyethylene terephthalate on at least one side of a metallic sheet, and showing about 22 to about 25 cm$^{-1}$ of half value width of shift peak caused by a C=O stretching vibration at 1730$\pm$20 cm$^{-1}$ in the Raman spectra, using a linear polarization laser light, on the film of the laminated metallic sheet for can after heat treatment.

2. The laminated metallic sheet for can as in claim 1, wherein the heat treatment is at least one treatment selected from the group consisting of baking finish and baking print.

3. The laminated metallic sheet for can as in claim 1, wherein the polyester resin is a copolyester containing about 50% by mole or more of ethylene terephthalate component.

4. The laminatedmetallic sheet for can as in claim 3, wherein the copolyester is a copolyester obtained from terephthalic acid, isophthalic acid, and ethylene glycol.

5. A laminated metallic sheet for can having excellent workability after heat treatment, comprising a polyester-based resin containing polyethylene terephthalate as a main component, being laminated on a metallic sheet, and showing 22 to 25 cm$^{-1}$ of half value width of Raman shift peak caused by a C=O stretching vibration in the vicinity of 1730$\pm$20 cm$^{-1}$ in the Laser Raman spectrometry, using a linear polarization laser light, on the film surface layer of the laminated metallic sheet for can after heat treatment.

## FIG. 1

# FIG. 2

# FIG. 3

# FIG. 4

# FIG. 5

# FIG. 6

## INTERNATIONAL SEARCH REPORT

| | International application No. |
|---|---|
| | PCT/JP2004/007306 |

**A. CLASSIFICATION OF SUBJECT MATTER**
Int.Cl⁷ B32B15/08

According to International Patent Classification (IPC) or to both national classification and IPC

**B. FIELDS SEARCHED**

Minimum documentation searched (classification system followed by classification symbols)
Int.Cl⁷ B32B15/08

Documentation searched other than minimum documentation to the extent that such documents are included in the fields searched
Jitsuyo Shinan Koho      1926–1996   Toroku Jitsuyo Shinan Koho   1994–2004
Kokai Jitsuyo Shinan Koho   1971–2004   Jitsuyo Shinan Toroku Koho   1996–2004

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-21496 A   (NKK Corp.),<br>26 January, 2001 (26.01.01),<br>Claims; Par. Nos. [0002], [0021]; Fig. 2<br>(Family: none) | 1,5<br>2-4 |
| Y | JP 2-57339 A   (Toyobo Co., Ltd.),<br>27 February, 1990 (27.02.90),<br>Claims; examples<br>(Family: none) | 3,4 |
| Y | JP 11-157007 A   (Toyobo Co., Ltd.),<br>15 June, 1999 (15.06.99),<br>Claims; Par. No. [0005]<br>(Family: none) | 2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>17 August, 2004 (17.08.04) | Date of mailing of the international search report<br>31 August, 2004 (31.08.04) |
|---|---|
| Name and mailing address of the ISA/<br>Japanese Patent Office | Authorized officer |
| Facsimile No. | Telephone No. |

Form PCT/ISA/210 (second sheet) (January 2004)

**INTERNATIONAL SEARCH REPORT**

International application No.

PCT/JP2004/007306

C (Continuation). DOCUMENTS CONSIDERED TO BE RELEVANT

| Category* | Citation of document, with indication, where appropriate, of the relevant passages | Relevant to claim No. |
|---|---|---|
| A | JP 5-254065 A (Toray Industries, Inc.), 05 October, 1993 (05.10.93), Claims; examples (Family: none) | 1-5 |
| A | JP 9-504750 A (Imperial Chemical Industries PLC), 13 May, 1997 (13.05.97), Claims; examples & WO 1995/08442 A1 & EP 720533 A1 | 1-5 |
| A | JP 2002-225186 A (Toyo Kohan Co., Ltd.), 14 August, 2002 (14.08.02), Claims; examples (Family: none) | 1-5 |

Form PCT/ISA/210 (continuation of second sheet) (January 2004)